# EUROPEAN PATENT SPECIFICATION

(11) **EP 4 051 739 B1**
(45) Date of publication and mention of the grant of the patent: **03.09.2025**
(21) Application number: 20753470.2
(22) Date of filing: 27.07.2020
(51) Int. Cl.: C09D 11/10

(54) **ACTIVE-ENERGY-RAY-CURABLE COMPOSITION, ACTIVE-ENERGY-RAY-CURABLE INK COMPOSITION, ACTIVE-ENERGY-RAY-CURABLE INKJET INK COMPOSITION, AND TWO-DIMENSIONAL OR THREE-DIMENSIONAL IMAGE FORMING METHOD**
DURCH AKTIVE ENERGIESTRAHLEN HÄRTBARE ZUSAMMENSETZUNG, DURCH AKTIVE ENERGIESTRAHLEN HÄRTBARE TINTENZUSAMMENSETZUNG, DURCH AKTIVE ENERGIESTRAHLEN HÄRTBARE TINTENSTRAHLTINTENZUSAMMENSETZUNG UND ZWEI- ODER DREIDIMENSIONALES BILDERZEUGUNGSVERFAHREN
COMPOSITION DURCISSABLE PAR RAYONNEMENT D'ÉNERGIE ACTIVE, COMPOSITION D'ENCRE DURCISSABLE PAR RAYONNEMENT D'ÉNERGIE ACTIVE, COMPOSITION D'ENCRE POUR JET D'ENCRE DURCISSABLE PAR RAYONNEMENT D'ÉNERGIE ACTIVE, ET PROCÉDÉ DE FORMATION D'IMAGE BIDIMENSIONNELLE OU TRIDIMENSIONNELLE

(30) Priority: 30.10.2019 JP 2019196887
(43) Date of publication of application: 07.09.2022
(73) Proprietor: Ricoh Company, Ltd., Tokyo 143-8555 (JP)
(72) Inventor: YAMAGUCHI, Tatsuki, Tokyo 143-8555 (JP); NOGUCHI, Soh, Tokyo 143-8555 (JP); MORITA, Mitsunobu, Tokyo 143-8555 (JP); OKADA, Takashi, Tokyo 143-8555 (JP)
(74) Representative: Marks & Clerk LLP
(86) International application number: PCT/JP2020/028693
(87) International publication number: WO 2021/084820

(56) References cited:
- EP-A1- 2 789 470
- JP-A- 2018 095 696
- US-A1- 2009 000 508

## Description

### Technical Field

The present disclosure relates to an active-energy-ray-curable composition, an active-energy-ray-curable ink composition, an active-energy-ray-curable inkjet ink composition, and a two-dimensional or three-dimensional image forming method.

### Background Art

Active-energy-ray-curable compositions cure by irradiation with active-energy-rays, and hence have a better driability than solvent-based ink composition. Active-energy-ray-curable compositions need to have adhesiveness with inorganic base materials such as glass.

For example, an inkjet ink composition containing a colorant, a polymerizable compound, a polymerization initiator, a nonreactive resin, and an organic solvent has been proposed as an inkjet ink composition that can form an image having an improved adhesiveness with a recording medium formed of an ink-nonabsorbable material (for example, see PTL 1).

An active-energy-ray-curable composition containing at least a polymerizable compound, a polyhedral silsesquioxane compound, a polymerizable hyperbranched oligomer, and a non-polymerizable resin has been proposed as an active-energy-ray-curable composition that can cure to a cured product excellent in adhesiveness and abrasion/wear resistance (for example, see PTL 2).

Each of the documents EP 2 789 470 A1 and US 2009/000508 A1 discloses a photocurable inkjet ink composition and an image forming method, wherein the ink comprises a polymerizable dendritically-branched compound and a polymerizable polyester resin having (meth)acryloyl groups.

However, attempts to achieve adhesiveness with base materials have sometimes been faced with a problem of coating film strength degradation.

It has been known that addition of resins is effective for improving adhesiveness.

However, if resins are high-molecular-weight resins, there is a problem in terms of inkjet discharging stability.

### Citation List

### Patent Literature

PTL 1: Japanese Patent No. 6134546
PTL 2: Japanese Unexamined Patent Application Publication No. 2018-095696

### Summary of Invention

### Technical Problem

The present disclosure has an object to provide an active-energy-ray-curable composition that satisfies both of adhesiveness with a base material and coating film strength, which hitherto have been trade-off properties, and has an excellent inkjet discharging stability.

### Solution to Problem

According to one aspect of the present disclosure, an active-energy-ray-curable composition contains a polymerizable dendritically-branched compound, and a polyester resin containing an unsaturated bond, wherein the polymerizable unsaturated bond comprised in the polyester resin is a polymerizable unsaturated bond other than a bond derived from a (meth)acryloyl group.

### Advantageous Effects of Invention

The present disclosure can provide an active-energy-ray-curable composition that satisfies both of adhesiveness with a base material and coating film strength and has an excellent inkjet discharging stability.

### Brief Description of Drawings

[fig.1]FIG. 1 is a schematic view illustrating an example of an image forming apparatus of the present disclosure.
[fig.2]FIG. 2 is a schematic view illustrating another example of an image forming apparatus of the present disclosure.
[fig.3A]FIG. 3A is a schematic view illustrating yet another example of an image forming apparatus of the present disclosure (part 1).
[fig.3B]FIG. 3B is a schematic view illustrating yet another example of an image forming apparatus of the present disclosure (part 2).
[fig.3C]FIG. 3C is a schematic view illustrating yet another example of an image forming apparatus of the present disclosure (part 3).
[fig.3D]FIG. 3D is a schematic view illustrating yet another example of an image forming apparatus of the present disclosure (part 4).

### Description of Embodiments

### (Active-energy-ray-curable composition)

An active-energy-ray-curable composition of the present disclosure contains a polymerizable dendritically-branched compound and a polyester resin containing an unsaturated bond, and further contains a polymerization initiator, a colorant, an organic solvent, and other components as needed.

The active-energy-ray-curable composition of the present disclosure is based on the following finding. Existing active-energy-ray-curable compositions may undergo coating film strength degradation through an attempt to improve adhesiveness with base materials, and through addition of resins for improving adhesiveness, may become unable to have a sufficient inkjet discharging stability if the resins are high-molecular-weight resins.

### <Polymerizable dendritically-branched compound>

As a polymerizable dendritically-branched compound of the present disclosure, it is preferable to use a polymerizable compound having a dendrimer structure or a hyperbranch structure. When a polymerizable compound having a dendrimer structure or a hyperbranch structure is used, the unique radial structure of such a compound enables active growth of a three-dimensional structure, making it possible to obtain an ink cured product having a high crosslink density and achieve a high coating film strength. When a polymerizable compound having a three-dimensionally radial steric structure unique to the material and containing an average of six or more polymerizable functional groups is used as the polymerizable compound having a dendrimer structure or a hyperbranch structure, a high crosslink density is achieved.

As compared with typical straight-chained polymerizable compound, the polymerizable compound having a dendrimer structure or a hyperbranch structure can efficiently relax external stress or internal stress owing to the unique steric structure, and can reduce adverse influence on adhesiveness with a base material.

The polymerizable dendritically-branched compound is preferably a compound containing at least an acryloyloxy group or a methacryloyloxy group at an end and having a dendrimer structure or a hyperbranch structure. The polymerizable dendritically-branched compound is preferably a radical polymerizable compound containing 6 or more radical polymerizable functional groups, which are acryloyloxy groups or methacryloyloxy groups, and having a dendrimer structure or a hyperbranch structure in a molecule thereof.

A "hyperbranch structure" refers to a hyperbranch polymer synthesized from self-condensation of a compound containing a total of three or more mutually-reactive two kinds of substituent groups in a molecule. A "dendrimer structure" refers to a hyperbranch polymer having a branch structure in which branch molecular structures serving as basic units repeatedly bond to a multifunctional compound referred to as a core molecule positioned at the center of the molecular structure.

The content of the polymerizable dendritically-branched compound is preferably 4.0% by mass or greater but 25.0% by mass or less and more preferably 4.8% by mass or greater but 20.0% by mass or less relative to the total amount of the composition. When the content of the polymerizable dendritically-branched compound is 4.0% by mass or greater, a sufficient coating film strength is obtained. When the content of the polymerizable dendritically-branched compound is 25.0% by mass or less, cure shrinkage is suppressed and adhesiveness degradation is less likely to occur.

An appropriately synthesized product or a commercially available product may be used as the radical polymerizable compound having a hyperbranch structure or a dendrimer structure. Examples of the synthesizing method include the followings.

A hyperbranch structure is obtained from self-condensation of an ABx-type molecule containing a total of three or more two kinds of substituent groups per molecule. For example, hyperbranch polyester is obtained from polycondensation of 3,5-dihyroxybenzoic acid used as an ingredient. In this case, the hyperbranch polyester has a hydroxyl group at an end. When acrylic acid or methacrylic acid is caused to act on the hydroxyl group, a radical polymerizable compound having a hyperbranch structure is obtained. Known dendrimer synthesizing methods include a divergent method of advancing synthesis outward from the core, a convergent method of advancing synthesis inward from functional groups at ends, and a method combining the two methods. For example, using the convergent method, a radical polymerizable compound having a dendrimer structure is obtained by coupling 2-(4-hydroxyphenoxyethyl)-acrylate with 5-hydroxyisophthalic acid as the first tier, and coupling the resultant with trimesic acid as the second tier.

When the polymerizable compound having a dendrimer structure or a hyperbranch structure contains polyester, the polymerizable compound belongs within polymerizable dendritically-branched compounds but does not belong within polyester resins containing a polymerizable unsaturated bond described below.

Examples of commercially available products include, but are not limited to, the following compounds: V#1000 (available from Osaka Organic Chemical Industry Ltd.), CN2302 (available from Sartomer USA, LLC), CN2303 (available from Sartomer USA, LLC), CN2304 (available from Sartomer USA, LLC), 6361-100 (available from Eternal Materials Co., Ltd.), and 6363 (available from Eternal Materials Co., Ltd.). One of these commercially available products may be used alone or two or more of these commercially available products may be used in combination.

### <Polyester resin containing polymerizable unsaturated bond>

The active-energy-ray-curable composition of the present disclosure contains a polyester resin containing a polymerizable unsaturated bond. It is inferred that the polyester resin copolymerizes with the polymerizable compound by containing a polymerizable unsaturated bond, to realize a robust adhesiveness with a base material. The polyester resin containing a polymerizable unsaturated bond of the present disclosure contain an unsaturated bond other than a bond derived from a (meth)acryloyl group. Examples of the unsaturated bond other than a bond derived from a (meth)acryloyl group include, but are not limited to, a vinyl group and an allyl group.

The representation "(meth)acryloyl group" as used herein is a generic term of an acryloyl group and a methacryloyl group.

Specific examples include UVAD-081 (available from Osaka Soda Co., Ltd.) and UVAD-085 (available from Osaka Soda Co., Ltd.).

The number average molecular weight of the polyester resin is preferably 3,000 or less. When the number average molecular weight of the polyester resin is 3,000 or less, inkjet discharging stability is less likely to degrade. The lower limit of the number average molecular weight of the polyester resin is, for example, about 500.

The content of the polyester resin is preferably 5.0% by mass or greater but 20.0% by mass or less and more preferably 10.0% by mass or greater but 15.0% by mass or less relative to the total amount of the composition. When the content of the polyester resin is 5.0% by mass or greater, a sufficient adhesiveness with a base material is obtained. When the content of the polyester resin is 20.0% by mass or less, discharging stability is less likely to degrade.

### <Other components>

The active-energy-ray-curable composition of the present disclosure may contain a polymerizable compound other than the polymerizable dendritically-branched compound and the polyester resin containing a polymerizable unsaturated bond. As the polymerizable compound, a monofunctional polymerizable monomer is preferable. Hitherto known compounds may be used as the polymerizable compound. One of these compounds may be used alone or two or more of these compounds may be used in combination.

Examples of the polymerizable compound when it is, for example, a monofunctional polymerizable monomer include, but are not limited to, phenoxyethyl acrylate, tetrahydrofurfuryl acrylate, isobornyl acrylate, 2-hydroxyethyl acrylate, 4-hydroxybutyl acrylate, isobutyl acrylate, t-butyl acrylate, isooctyl acrylate, 2-methoxyethyl acrylate, methoxytriethylene glycol acrylate, 2-ethoxyethyl acrylate, 3-methoxybutyl acrylate, ethoxyethyl acrylate, butoxyethyl acrylate, ethoxydiethylene glycol acrylate, methoxy-dixylethyl acrylate, ethyldiglycol acrylate, cyclic trimethylolpropane formal monoacrylate, imide acrylate, isoamyl acrylate, ethoxylated succinic acid acrylate, trifluoroethyl acrylate, ω-carboxypolycaprolactone monoacrylate, N-vinyl formamide, cyclohexyl acrylate, benzyl acrylate, methylphenoxyethyl acrylate, 4-t-butylcyclohexyl acrylate, caprolactone-modified tetrahydrofurfuryl acrylate, tribromophenyl acrylate, ethoxylated tribromophenyl acrylate, 2-phenoxyethyl acrylate, acryloylmorpholine, phenoxydiethylene glycol acrylate, vinyl caprolactam, vinylpyrrolidone, 2-hydroxy-3-phenoxypropyl acrylate, 1,4-cyclohexanedimethanol monoacrylate, 2-(2-ethoxyethoxy)ethyl acrylate, stearyl acrylate, diethyleneglycol monobutyl ether acrylate, lauryl acrylate, isodecyl acrylate, 3,3,5-trimethylcyclohexanol acrylate, isooctyl acrylate, octyl/decyl acrylate, tridecyl acrylate, caprolactone acrylate, ethoxylated (4) nonylphenol acrylate, methoxypolyethylene glycol (350) monoacrylate, and methoxypolyethylene glycol (550) monoacrylate. Among these polymerizable compounds, monofunctional polymerizable monomers containing a cyclic structure is particularly preferable.

Specific examples of the polymerizable compound include THFA (tetrahydrofurfuryl acrylate, BISCOAT #150, available from Osaka Organic Chemical Industry Ltd.), and IBXA (isobornyl acrylate, available from Osaka Organic Chemical Industry Ltd.).

When the active-energy-ray-curable composition contains the polymerizable compound, the content of the polymerizable compound is preferably 40.0% by mass or greater but 80.0% by mass or less and more preferably 60.0% by mass or greater but 76.0% by mass or less. When the content of the polymerizable compound is 40.0% by mass or greater, adhesiveness with a base material is good. When the content of the polymerizable compound is 80.0% by mass or less, pencil hardness is good.

### <Active energy rays>

Active energy rays used for curing an active-energy-ray-curable composition of the present disclosure are not particularly limited, so long as they are able to give necessary energy for allowing polymerization reaction of polymerizable components in the composition to proceed. Examples of the active energy rays include electron beams, α-rays, β-rays, γ-rays, and X-rays, in addition to ultraviolet rays. When a light source having a particularly high energy is used, polymerization reaction can be allowed to proceed without a polymerization initiator. In addition, in the case of irradiation with ultraviolet ray, mercury-free is preferred in terms of protection of environment. Therefore, replacement with GaN-based semiconductor ultraviolet light-emitting devices is preferred from industrial and environmental point of view. Furthermore, ultraviolet light-emitting diode (UV-LED) and ultraviolet laser diode (UV-LD) are preferable as an ultraviolet light source. Small sizes, long time working life, high efficiency, and high cost performance make such irradiation sources desirable.

### <Polymerization initiator>

The active-energy-ray-curable composition of the present disclosure optionally contains a polymerization initiator. The polymerization initiator produces active species such as a radical or a cation upon application of energy of an active energy ray and initiates polymerization of a polymerizable compound (monomer or oligomer). As the polymerization initiator, it is suitable to use a known radical polymerization initiator, cation polymerization initiator, base producing agent, or a combination thereof. Of these, a radical polymerization initiator is preferable. Moreover, the polymerization initiator preferably accounts for 5 percent by weight to 20 percent by weight of the total content of the composition (100 percent by weight) to obtain sufficient curing speed.

Specific examples of the radical polymerization initiators include, but are not limited to, aromatic ketones, acylphosphine oxide compounds, aromatic onium chlorides, organic peroxides, thio compounds (thioxanthone compounds, thiophenyl group containing compounds, etc.), hexaaryl biimidazole compounds, ketoxime ester compounds, borate compounds, azinium compounds, metallocene compounds, active ester compounds, compounds having a carbon halogen bond(s), and alkyl amine compounds.

In addition, a polymerization accelerator (sensitizer) is optionally used together with the polymerization initiator. The polymerization accelerator is not particularly limited. Preferred examples thereof include, but are not limited to, amines such as trimethylamine, methyl dimethanol amine, triethanol amine, p-diethylamino acetophenone, p-dimethyl amino ethylbenzoate, p-dimethyl amino benzoate-2-ethylhexyl, N,N-dimethyl benzylamine and 4,4'-bis(diethylamino)benzophenone. The content thereof is determined depending on the identity (type) of the polymerization initiator and the content thereof.

### <Colorant>

The composition of the present disclosure may contain a colorant. As the colorant, various pigments and dyes may be used that impart black, white, magenta, cyan, yellow, green, orange, and gloss colors such as gold and silver, depending on the intended purpose of the composition and requisite properties thereof. A content of the colorant in the composition is not particularly limited, and may be appropriately determined considering, for example, a desired color density and dispersibility of the colorant in the composition. However, it is preferably from 0.1% by mass to 20% by mass relative to the total mass (100% by mass) of the composition. Incidentally, the active-energy-ray-curable composition of the present disclosure does not necessarily contain a colorant but can be clear and colorless. In such a case, for example, such a clear and colorless composition is good for an overcoating layer to protect an image.

The pigment can be either inorganic or organic, and two or more of the pigments can be used in combination.

Specific examples of the inorganic pigments include, but are not limited to, carbon blacks (C.I. Pigment Black 7) such as furnace black, lamp black, acetylene black, and channel black, iron oxides, and titanium oxides.

Specific examples of the organic pigments include, but are not limited to, azo pigments such as insoluble azo pigments, condensed azo pigments, azo lakes, and chelate azo pigments, polycyclic pigments such as phthalocyanine pigments, perylene pigments, perinone pigments, anthraquinone pigments, quinacridone pigments, dioxane pigments, thioindigo pigments, isoindolinone pigments, and quinofuranone pigments, dye chelates (e.g., basic dye chelates, acid dye chelates), dye lakes (e.g., basic dye lakes, acid dye lakes), nitro pigments, nitroso pigments, aniline black, and daylight fluorescent pigments.

In addition, a dispersant is optionally added to enhance the dispersibility of pigment. The dispersant has no particular limit and can be, for example, polymer dispersants conventionally used to prepare pigment dispersion (material).

The dyes include, for example, acidic dyes, direct dyes, reactive dyes, basic dyes, and combinations thereof.

### <Organic solvent>

The active-energy-ray-curable composition of the present disclosure optionally contains an organic solvent although it is preferable to spare it. The curable composition free of an organic solvent, in particular volatile organic compound (VOC), is preferable because it enhances safety at where the composition is handled and makes it possible to prevent pollution of the environment. Incidentally, the organic solvent represents a conventional non-reactive organic solvent, for example, ether, ketone, xylene, ethyl acetate, cyclohexanone, and toluene, which is clearly distinguished from reactive monomers. Furthermore, "free of" an organic solvent means that no organic solvent is substantially contained. The content thereof is preferably less than 0.1 percent by mass.

### <Other components>

The active-energy-ray-curable composition of the present disclosure optionally contains other known components. The other known components are not particularly limited. Specific examples thereof include, but are not limited to, known articles such as surfactants, polymerization inhibitors, leveling agents, defoaming agents, fluorescent brighteners, permeation enhancing agents, wetting agents (humectants), fixing agents, viscosity stabilizers, fungicides, preservatives, antioxidants, ultraviolet absorbents, chelate agents, pH adjusters (regulators), and thickeners.

### <Preparation of active-energy-ray-curable composition>

The active-energy-ray-curable composition of the present disclosure can be prepared by using the components described above. The preparation devices and conditions are not particularly limited. For example, the curable-composition can be prepared by subjecting a polymerizable monomer, a pigment, a dispersant, etc., to a dispersion treatment using a dispersing machine such as a ball mill, a kitty mill, a disk mill, a pin mill, and a DYNO-MILL to prepare a pigment liquid dispersion, and further mixing the pigment liquid dispersion with a polymerizable monomer, an initiator, a polymerization inhibitor, and a surfactant.

### <Viscosity>

The viscosity of the active-energy-ray-curable composition of the present disclosure has no particular limit because it can be adjusted depending on the purpose and application devices. For example, if an ejecting device that ejects the composition from nozzles is employed, the viscosity thereof is preferably in the range of 3 mPa • s to 40 mPa • s, more preferably 5 mPa • s to 15 mPa • s, and particularly preferably 6 mPa • s to 12 mPa • s in the temperature range of 20 degrees C to 65 degrees C, preferably at 25 degrees C. In addition, it is particularly preferable to satisfy this viscosity range by the composition free of the organic solvent described above. Incidentally, the viscosity can be measured by a cone plate rotary viscometer (VISCOMETER TVE-22L, manufactured by TOKI SANGYO CO.,LTD.) using a cone rotor (1°34' x R24) at a number of rotation of 50 rpm with a setting of the temperature of hemathermal circulating water in the range of 20 degrees C to 65 degrees C. VISCOMATE VM-150III can be used for the temperature adjustment of the circulating water.

### <Application field>

The application field of the active-energy-ray-curable composition of the present disclosure is not particularly limited. It can be applied to any field where active-energy-ray-curable compositions are used. For example, the curable composition is selected to a particular application and used for a resin for processing, a paint, an adhesive, an insulant, a releasing agent, a coating material, a sealing material, various resists, and various optical materials.

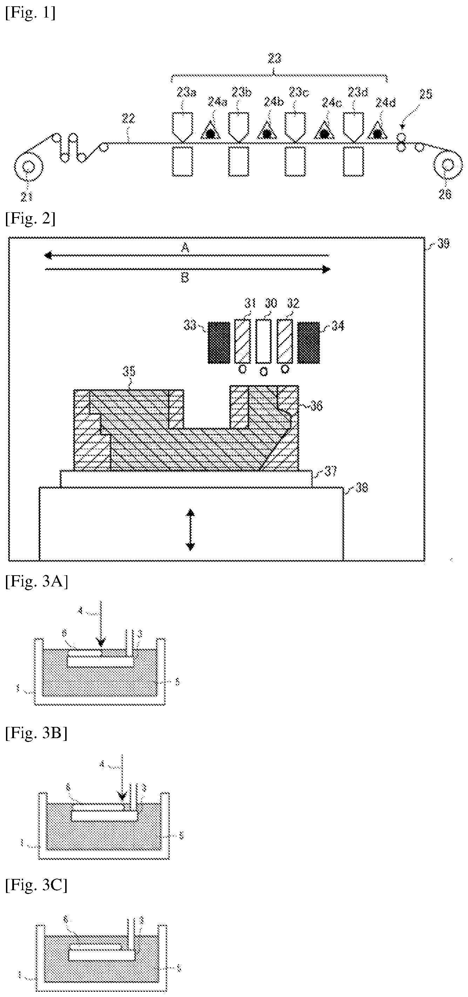

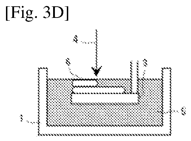

Furthermore, the active-energy-ray-curable composition of the present disclosure can be used as an ink to form two-dimensional texts, images, and designed coating film on various substrates and in addition as a solid object forming material to form a three-dimensional object. This three dimensional object forming material may also be used as a binder for powder particles used in a powder layer laminating method of forming a three-dimensional object by repeating curing and layer-forming of powder layers, and as a three-dimensional object constituent material (a model material) and a supporting member used in an additive manufacturing method (a stereolithography method) as illustrated in FIG. 2, FIG. 3A, FIG. 3B, FIG. 3C, and FIG. 3D. FIG. 2 is a diagram illustrating a method of additive manufacturing to sequentially form layers of the active-energy-ray-curable composition of the present disclosure one on top of the other by repeating discharging the curable composition to particular areas followed by curing upon irradiation of an active energy ray (to be described in detail below). FIGS. 3A to 3D are each a diagram illustrating a method of additive manufacturing to sequentially form cured layers 6 having respective predetermined forms one on top of the other on a movable stage 3 by irradiating a storing pool (storing part) 1 of the active energy ray curable composition 5 of the present disclosure with the active energy ray 4. In FIG. 3A, the storing pool (storing part) 1 of the active-energy-ray-curable composition 5 of the present disclosure is irradiated with the active energy ray 4. Then, in FIG. 3B, a cured layer 6 having a predetermined form is formed on the movable stage 3 by irradiation with the active energy ray 4. Then, in FIG. 3C, the movable stage 3 is lowered. Then, in FIG. 3D, another cured layer 6 is formed on the obtained cured layer 6 by irradiation with the active energy ray 4.

An apparatus for fabricating a three-dimensional object by the active-energy-ray-curable composition of the present disclosure is not particularly limited and can be a known apparatus. For example, the apparatus includes a containing device, a supplying device, and a discharging device of the curable composition, and an active energy ray irradiator.

In addition, the present disclosure includes cured materials obtained by curing the active-energy-ray-curable composition and processed products obtained by processing structures having the cured materials on a substrate. The processed product is fabricated by, for example, heat-drawing and punching a cured material or structure having a sheet-like form or film-like form. Examples thereof are products that need processing after decoration of the surface, such as gauges or operation panels of vehicles, office machines, electric and electronic machines, and cameras. The substrate is not particularly limited. It can suitably be selected to a particular application. Examples thereof include paper, thread, fiber, fabrics, leather, metal, plastic, glass, wood, ceramic, or composite materials thereof. Of these, plastic substrates are preferred in terms of processability.

### <Composition stored container>

The composition stored container of the present disclosure contains the active-energy-ray-curable composition and is suitable for the applications as described above. For example, if the active-energy-ray-curable composition of the present disclosure is used for ink, a container that stores the ink can be used as an ink cartridge or an ink bottle. Therefore, users can avoid direct contact with the ink during operations such as transfer or replacement of the ink, so that fingers and clothes are prevented from contamination. Furthermore, inclusion of foreign matters such as dust in the ink can be prevented. In addition, the container can be of any size, any form, and any material. For example, the container can be designed to a particular application. It is preferable to use a light blocking material to block the light or cover a container with a light blocking sheet, etc.

### <Image forming method and image forming apparatus>

The image forming method of the present disclosure may, for example, use an active energy ray and heating.

The image forming method of the present disclosure includes at least an irradiating step of irradiating the active-energy-ray-curable composition of the present disclosure with an active energy ray to cure the curable composition. The image forming apparatus of the present disclosure includes at least an irradiator to irradiate the curable composition of the present disclosure with an active energy ray and a storing part containing the active-energy-ray-curable composition of the present disclosure. The storing part may include the container mentioned above. Furthermore, the method and the apparatus may respectively include a discharging step and a discharging device to discharge the active energy ray curable composition. The method of discharging the curable composition is not particularly limited, and examples thereof include a continuous jetting method and an on-demand method. The on-demand method includes a piezo method, a thermal method, an electrostatic method, etc.

FIG. 1 is a diagram illustrating a two-dimensional image forming apparatus equipped with an inkjet discharging device. Printing units 23a, 23b, 23c, and 23d respectively having ink cartridges and discharging heads for yellow, magenta, cyan, and black active-energy-ray-curable inks discharge the inks onto a recording medium 22 fed from a supplying roller 21. Thereafter, light sources 24a, 24b, 24c, and 24d configured to cure the inks emit active energy rays to the inks, thereby curing the inks to form a color image. Thereafter, the recording medium 22 is conveyed to a processing unit 25 and a printed matter reeling roll 26. Each of the printing unit 23a, 23b, 23c and 23d may have a heating mechanism to liquidize the ink at the ink discharging portion. Moreover, in another embodiment of the present disclosure, a mechanism may optionally be included to cool down the recording medium to around room temperature in a contact or non-contact manner. In addition, the inkjet recording method may be either of serial methods or line methods. The serial methods include discharging an ink onto a recording medium by moving the head while the recording medium intermittently moves according to the width of a discharging head. The line methods include discharging an ink onto a recording medium from a discharging head held at a fixed position while the recording medium continuously moves.

The recording medium 22 is not particularly limited. Specific examples thereof include, but are not limited to, paper, film, ceramic, glass, metal, or complex materials thereof. The recording medium 22 takes a sheet-like form but is not limited thereto. The image forming apparatus may have a one-side printing configuration and/or a two-side printing configuration. The recording medium 22 is not limited to common recording media, but cardboard, building materials such as wallpaper and flooring, concrete, cloths for, for example, clothing such as T-shirts, textiles, and leather can be appropriately used.

Optionally, multiple colors can be printed with no or weak active energy ray from the light sources 24a, 24b, and 24c followed by irradiation of the active energy ray from the light source 24d. As a result, energy and cost can be saved.

The recorded matter having images printed with the ink of the present disclosure includes articles having printed images or texts on a plain surface of conventional paper, resin film, etc., a rough surface, or a surface made of various materials such as metal or ceramic. In addition, by laminating layers of images in part or the entire of a recording medium, a partially stereoscopic image (formed of two dimensional part and three-dimensional part) and a three dimensional objects can be fabricated.

FIG. 2 is a schematic diagram illustrating another example of the image forming apparatus (apparatus to fabricate a 3D object) of the present disclosure. An image forming apparatus 39 illustrated in FIG. 2 sequentially forms thin layers one on top of the other using a head unit having inkjet heads arranged movable in the directions indicated by the arrows A and B. In the image forming apparatus 39, an ejection head unit 30 for additive manufacturing ejects a first active-energy-ray-curable composition, and ejection head units 31 and 32 for support and curing these compositions ejects a second active-energy-ray-curable composition having a different composition from the first active-energy-ray-curable composition, while ultraviolet irradiators 33 and 34 adjacent to the ejection head units 31 and 32 cure the compositions. To be more specific, for example, after the ejection head units 31 and 32 for support eject the second active-energy-ray-curable composition onto a substrate 37 for additive manufacturing and the second active-energy-ray-curable composition is solidified by irradiation of an active energy ray to form a first substrate layer having a space for composition, the ejection head unit 30 for additive manufacturing ejects the first active-energy-ray-curable composition onto the pool followed by irradiation of an active energy ray for solidification, thereby forming a first additive manufacturing layer. This step is repeated multiple times lowering the stage 38 movable in the vertical direction to laminate the supporting layer and the additive manufacturing layer to fabricate a solid object 35. Thereafter, an additive manufacturing support 36 is removed, if desired. Although only a single ejection head unit 30 for additive manufacturing is provided to the image forming apparatus illustrated in FIG. 2, it can have two or more units 30.

### (Active-energy-ray-curable ink composition and active-energy-ray-curable inkjet ink composition)

The active-energy-ray-curable composition of the present disclosure satisfies both of adhesiveness with a base material and coating film strength, and has an excellent inkjet discharging stability. Therefore, the active-energy-ray-curable composition can be suitably used as an active-energy-ray-curable ink composition, and can be particularly suitably used as an active-energy-ray-curable inkjet ink composition.

### (Cured product)

A cured product of the present disclosure is formed by irradiating and curing with an active energy ray, at least one of the active-energy-ray-curable composition, the active-energy-ray-curable ink composition, and the active-energy-ray-curable inkjet ink composition of the present disclosure.

As the active-energy-ray-curable composition, the same active-energy-ray-curable composition as described above can be used. As the active-energy-ray-curable ink composition, the same active-energy-ray-curable ink composition as described above can be used. As the active-energy-ray-curable inkjet ink composition, the same active-energy-ray-curable inkjet ink composition as described above can be used.

### (Decorated product)

A decorated product of the present disclosure includes a base material and a surface decoration applied over the base material and formed of a cured product. The same cured product as described above can be used.

### Examples

The present disclosure will be described below by way of Examples. The present disclosure should not be construed as being limited to these Examples.

### (Examples 1 to 15 and Comparative Examples 1 to 17)

### <Materials used>

Dendritically-branched compounds used are presented in Table 1, and polyester resins used are presented in Table 2.

As other materials, THFA (product name: BISCOAT #150, obtained from Osaka Organic Chemical Industry Ltd.), IBXA (obtained from Osaka Organic Chemical Industry Ltd.), and TMPTA (obtained from Daicel-Allnex Ltd.) were used as polymerizable monomers, OMNIRAD TPO (obtained from IGM Resins B.V.) was used as a polymerization initiator, and BHT (obtained from Tokyo Chemical Industry, Co., Ltd.) was used as a polymerization inhibitor.

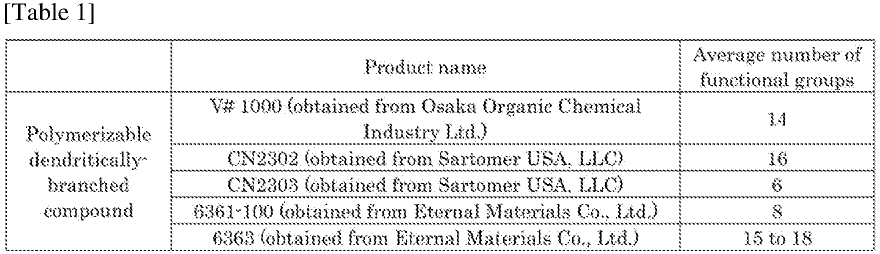

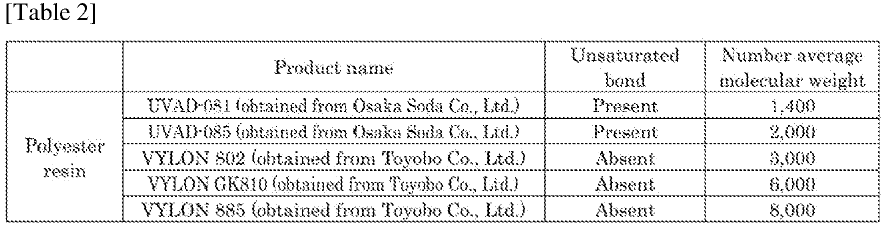

### <Production of active-energy-ray-curable composition>

Active-energy-ray-curable compositions of Examples and Comparative Examples were prepared based on the materials and contents (% by mass) presented in Table 3 to Table 6.

A film (with a thickness of 10 micrometers) of the active-energy-ray-curable composition of each of Examples and Comparative Examples was formed over base materials (a glass slide, a stainless steel plate, and a polypropylene film). The coating film formed was cured with a metal halide lamp (obtained from Ushio Inc.) (4,000 mJ/ cm²).

Next, various properties of the obtained coating films were evaluated in the manners described below. The results are presented in Table 3 to Table 6.

### <Coating film strength (pencil hardness)>

The coating film strength was evaluated according to a pencil hardness test JIS K5600-5-4 (scratch hardness: pencil method). A preferable hardness is H or higher. However, a hardness of at least 2B or higher is a non-problematic level for practical use.

### <Adhesiveness>

Adhesiveness was measured according to a crosscut method for an adhesiveness test JIS K5600-5-6, and evaluated according to the criteria described below.

### <Evaluation criteria>

A: Not peeled at all.
B: Peeled along a notch of a cutter, but no grid was peeled.
C: Less than 50% of all grids were peeled.
D: Fifty percent or more of all grids were peeled.

### <Inkjet discharging stability>

Each inkjet ink produced based on the materials and contents (% by mass) presented in Table 3 to Table 6 was set in an inkjet discharging apparatus (obtained from Ricoh Company, Ltd., with a head GEN 5 obtained from Ricoh Printing Systems, Ltd.) and discharged continuously for 30 minutes. Subsequently, the discharging conditions of the nozzles were observed with a camera, to evaluate inkjet discharging stability according to the criteria described below.

### <Evaluation criteria>

B: The ink was discharged from all nozzles.
C: The ink was not discharged from less than thirty nozzles.
D: The ink was not discharged from thirty or more nozzles.

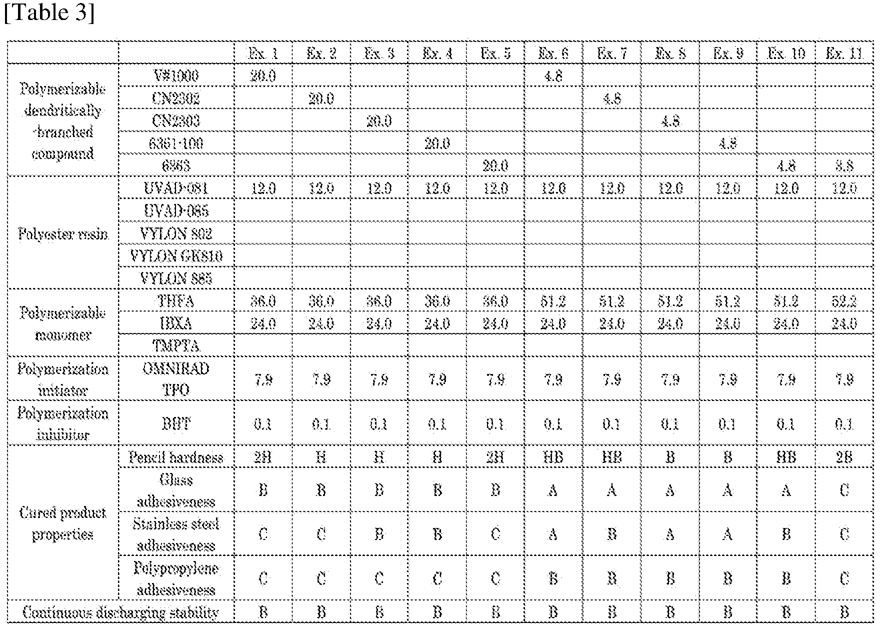

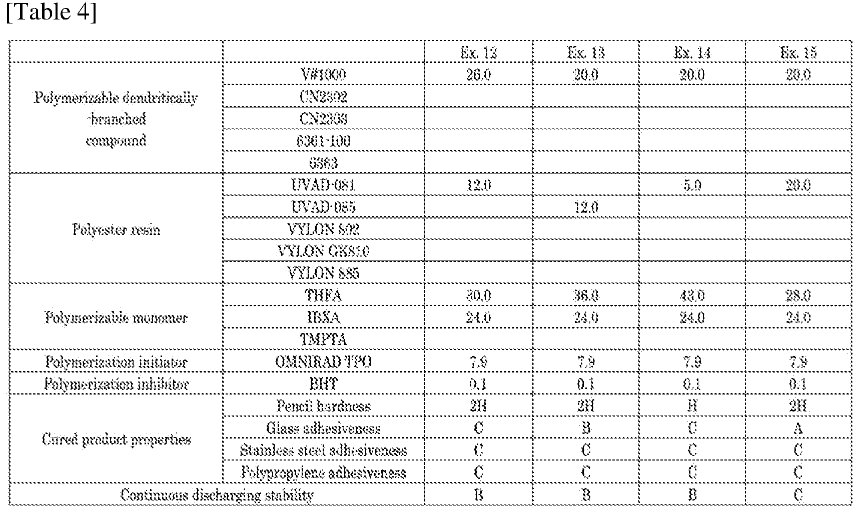

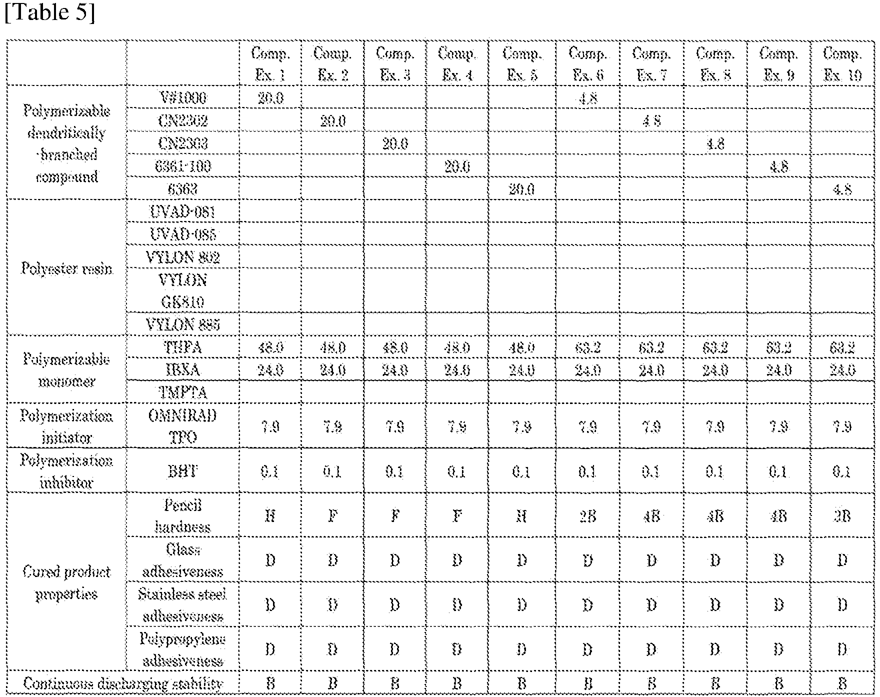

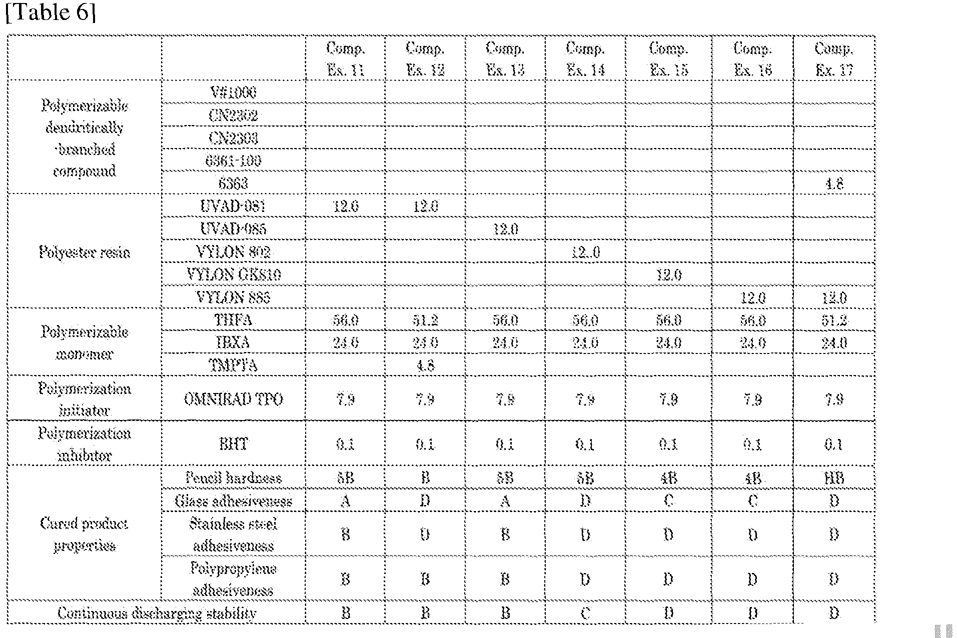

### Reference Signs List

1: storing pool
21: supplying roller
22: recording medium
23a, 23b, 23c, 23d: printing unit
24a, 24b, 24c, 24d: light source
25: processing unit
26: printed matter reeling roll
3: movable stage
30: ejection head unit for additive manufacturing
31, 32: ejection head unit for support
33, 34: ultraviolet irradiator
35: solid object
36: additive manufacturing support
37: substrate for additive manufacturing
38: stage
39: image forming apparatus
4: active energy ray
5: active-energy-ray-curable composition
6: cured layer

## Claims

1. An active-energy-ray-curable composition comprising:
a polymerizable dendritically-branched compound; and
a polyester resin containing a polymerizable unsaturated bond,
wherein the polymerizable unsaturated bond comprised in the polyester resin is a polymerizable unsaturated bond other than a bond derived from a (meth)acryloyl group.

2. The active-energy-ray-curable composition according to claim 1,
wherein a number average molecular weight of the polyester resin is 3,000 or less.

3. The active-energy-ray-curable composition according to claim 1 or 2,
wherein the polymerizable dendritically-branched compound comprises a hyperbranch structure or a dendrimer structure.

4. The active-energy-ray-curable composition according to any one of claims 1 to 3,
wherein a content of the polymerizable dendritically-branched compound is 4.0% by mass or greater but 25.0% by mass or less.

5. The active-energy-ray-curable composition according to any one of claims 1 to 4,
wherein a content of the polyester resin is 5.0% by mass or greater but 20.0% by mass or less.

6. An active-energy-ray-curable ink composition comprising
the active-energy-ray-curable composition according to any one of claims 1 to 5.

7. An active-energy-ray-curable inkjet ink composition comprising
the active-energy-ray-curable ink composition according to claim 6.

8. A two-dimensional or three-dimensional image forming method comprising
irradiating with an active energy ray, one selected from the group consisting of the active-energy-ray-curable composition according to any one of claims 1 to 5, the active-energy-ray-curable ink composition according to claim 6, and the active-energy-ray-curable inkjet ink composition according to claim 7.

## Patentansprüche

1. Durch aktive Energiestrahlen härtbare Zusammensetzung, Folgendes umfassend:
eine polymerisierbare, dendritisch verzweigte Verbindung; und
ein Polyesterharz, das eine polymerisierbare, ungesättigte Bindung enthält,
wobei die in dem Polyesterharz umfassende polymerisierbare, ungesättigte Bindung eine polymerisierbare, ungesättigte Bindung ist, die anders als eine von einer (Meth)acryloylgruppe abgeleitete Bindung ist.

2. Durch aktive Energiestrahlen härtbare Tintenstrahlzusammensetzung nach Anspruch 1,
wobei das zahlenmittlere Molekulargewicht des Polyesterharzes 3 000 oder weniger beträgt.

3. Durch aktive Energiestrahlen härtbare Zusammensetzung nach Anspruch 1 oder 2,
wobei die polymerisierbare, dendritisch verzweigte Verbindung eine Hyperverzweigungsstruktur oder eine Dendrimerstruktur umfasst.

4. Durch aktive Energiestrahlen härtbare Zusammensetzung nach einem der Ansprüche 1 bis 3,
wobei ein Gehalt der polymerisierbaren, dendritisch verzweigten Verbindung 4,0 Massenprozent oder mehr, aber 25,0 Massenprozent oder weniger beträgt.

5. Durch aktive Energiestrahlen härtbare Zusammensetzung nach einem der Ansprüche 1 bis 4,
wobei ein Gehalt des Polyesterharzes 5,0 Massenprozent oder mehr, aber 20,0 Massenprozent oder weniger beträgt.

6. Durch aktive Energiestrahlen härtbare Tintenzusammensetzung, umfassend:
die durch aktive Energiestrahlen härtbare Zusammensetzung nach einem der Ansprüche 1 bis 5.

7. Durch aktive Energiestrahlen härtbare Tintenstrahltintenzusammensetzung, umfassend:
die durch aktive Energiestrahlen härtbare Tintenzusammensetzung nach Anspruch 6.

8. Verfahren zur Erzeugung zweidimensionaler oder dreidimensionaler Bilder, Folgendes umfassend:
Bestrahlen von einer Zusammensetzung, ausgewählt aus der Gruppe, bestehend aus der durch aktive Energiestrahlen härtbaren Zusammensetzung nach einem der Ansprüche 1 bis 5, der durch aktive Energiestrahlen härtbaren Tintenzusammensetzung nach Anspruch 6 und der durch aktive Energiestrahlen härtbaren Tintenstrahltintenzusammensetzung nach Anspruch 7, mit einem aktiven Energiestrahl.

## Revendications

1. Composition durcissable par rayonnement d'énergie active comprenant :
un composé polymérisable à ramification dendritique, et
une résine de polyester contenant une liaison insaturée polymérisable,
dans lequel la liaison insaturée polymérisable comprise dans la résine de polyester est une liaison insaturée polymérisable autre qu'une liaison dérivée d'un groupe (méth)acryloyle.

2. Composition durcissable par rayonnement d'énergie active selon la revendication 1,
dans laquelle un poids moléculaire moyen en nombre de la résine de polyester est inférieur ou égal à 3 000.

3. Composition durcissable par rayonnement d'énergie active selon la revendication 1 ou 2,
dans laquelle le composé polymérisable à ramification dendritique comprend une structure hyper-ramifiée ou une structure de dendrimère.

4. Composition durcissable par rayonnement d'énergie active selon l'une quelconque des revendications 1 à 3,
dans laquelle une teneur du composé polymérisable à ramification dendritique est égale ou supérieure à 4,0 % en masse, mais inférieure ou égale à 25 % en masse.

5. Composition durcissable par rayonnement d'énergie active selon l'une quelconque des revendications 1 à 4,
dans laquelle une teneur de la résine de polymère est égale ou supérieure à 5,0 % en masse, mais inférieure ou égale à 20 % en masse.

6. Composition d'encre durcissable par rayonnement d'énergie active comprenant
la composition durcissable par rayonnement d'énergie active selon l'une quelconque des revendications 1 à 5.

7. Composition d'encre pour jet d'encre durcissable par rayonnement d'énergie active comprenant
la composition d'encre durcissable par rayonnement d'énergie active selon la revendication 6.

8. Procédé de formation d'image bidimensionnelle ou tridimensionnelle comprenant :
l'irradiation, avec un rayonnement d'énergie active, d'une composition sélectionnée dans le groupe constitué par la composition durcissable par rayonnement d'énergie active selon l'une quelconque des revendications 1 à 5, la composition d'encre durcissable par rayonnement d'énergie active selon la revendication 6 et la composition d'encre pour jet d'encre durcissable par rayonnement d'énergie active selon la revendication 7.
